# EUROPEAN PATENT SPECIFICATION

(11) **EP 3 598 842 B1**
(45) Date of publication and mention of the grant of the patent: **14.07.2021**
(21) Application number: 18184773.2
(22) Date of filing: 20.07.2018
(51) Int. Cl.: H04W 84/12, H04W 12/06, H04W 88/08, H04W 48/18, H04L 9/32, H04W 8/00, H04W 12/069, H04W 12/50

(54) **NETWORK SHARING**
NETZWERKTEILUNG
PARTAGE DE RÉSEAU

(43) Date of publication of application: 22.01.2020
(73) Proprietor: Nokia Technologies Oy, 02610 Espoo (FI)
(72) Inventor: SIGNORINI, Matteo, 91120 Palaiseau (FR); PONTECORVI, Matteo, 91120 Palaiseau (FR)
(74) Representative: Laine IP Oy

(56) References cited:
- EP-A1- 3 110 207
- US-A1- 2007 054 654
- US-A1- 2017 031 874
- NIU YUKUN ET AL: "An anonymous and accountable authentication scheme for Wi-Fi hotspot access with the Bitcoin blockchain", 2017 IEEE/CIC INTERNATIONAL CONFERENCE ON COMMUNICATIONS IN CHINA (ICCC), IEEE, 22 October 2017 (2017-10-22), pages 1-6, XP033343256, DOI: 10.1109/ICCCHINA.2017.8330337 [retrieved on 2018-04-02]

## Description

### FIELD

The present disclosure relates to management of communication network connectivity resources.

### BACKGROUND

Offering guest-wireless Internet connectivity has become commonplace in customer premises, such as hotels and coffee shops. Such connectivity may be offered via wireless local area network, WLAN, connectivity, for example by an open network, or by providing a password to customers in the premises.

Subscribers can use such guest connectivity alternatively to, or additionally to, service provided by their internet service provider, ISP. An ISP connectivity service may be based on wide-area networking, for example via a cellular communication technology such as long term evolution, LTE, or fifth generation, 5G, also known as New Radio, NR

Document US2017/031874 A1 discloses use of a blockchain in deep links for mobile apps, wherein the deep links are usable in building a social network graph and facilitating searching between the apps. Data including identifiers and signatures may be stored in the blockchain of this document.

### SUMMARY OF THE INVENTION

According to some aspects, there is provided the subject-matter of the independent claims. Some embodiments are defined in the dependent claims.

According to a first aspect of the present invention, there is provided an apparatus comprising at least one processing core, at least one memory including computer program code, the at least one memory and the computer program code being configured to, with the at least one processing core, cause the apparatus at least to participate in a handshake process with a client device, the handshake process relating to sharing of a network connection with the client device, responsive to the handshake process being successful, share the network connection with the client device, the network connection being to a service provider of the apparatus, and after the sharing ends, record information relating to the sharing in a blockchain, comprising a quantity of data conveyed over the shared connection.

According to a second aspect of the present invention, there is provided an apparatus comprising at least one processing core, at least one memory including computer program code, the at least one memory and the computer program code being configured to, with the at least one processing core, cause the apparatus at least to participate in a handshake process with a networked device, the handshake process relating to sharing of a network connection of the networked device with the apparatus, responsive to the handshake process being successful, access the network connection of the networked device, the network connection being to a service provider of the networked device, and after the sharing ends, record information relating to the sharing in a blockchain, comprising a quantity of data conveyed over the shared connection.

(deleted)

(deleted)

According to a third aspect of the present invention, there is provided an apparatus comprising means for participating in a handshake process with a client device, the handshake process relating to sharing of a network connection with the client device, responsive to the handshake process being successful, sharing the network connection with the client device, the network connection being to a service provider of the apparatus, and after the sharing ends, recording information relating to the sharing in a blockchain, comprising a quantity of data conveyed over the shared connection.

According to a fourth aspect of the present invention, there is provided an apparatus comprising means for participating in a handshake process with a networked device, the handshake process relating to sharing of a network connection of the networked device with the apparatus, responsive to the handshake process being successful, accessing the network connection of the networked device, the network connection being to a service provider of the networked device, and after the sharing ends, recording information relating to the sharing in a blockchain, comprising a quantity of data conveyed over the shared connection.

According to a fifth aspect of the present invention, there is provided a method comprising participating in a handshake process with a client device, the handshake process relating to sharing of a network connection with the client device, responsive to the handshake process being successful, sharing the network connection with the client device, the network connection being to a service provider of an apparatus performing the method, and after the sharing ends, recording information relating to the sharing in a blockchain, comprising a quantity of data conveyed over the shared connection.

According to an sixth aspect of the present invention, there is provided a method comprising participating in a handshake process with a networked device, the handshake process relating to sharing of a network connection of the networked device with an apparatus performing the method, responsive to the handshake process being successful, accessing the network connection of the networked device, the network connection being to a service provider of the networked device, and after the sharing ends, recording information relating to the sharing in a blockchain, comprising a quantity of data conveyed over the shared connection. The invention is disclosed in the appended claims.

### BRIEF DESCRIPTION OF THE DRAWINGS

FIGURE 1 illustrates an example system in accordance with at least some embodiments of the present invention;
FIGURE 2 illustrates an example of blockchain content in accordance with at least some embodiments of the present invention;
FIGURE 3 illustrates an example apparatus capable of supporting at least some embodiments of the present invention;
FIGURE 4 illustrates signalling in accordance with at least some embodiments of the present invention;
FIGURE 5 is a flow graph of a method in accordance with at least some embodiments of the present invention, and
FIGURE 6 is a flow graph of a method in accordance with at least some embodiments of the present invention.

### EMBODIMENTS

Sharing of a network connection may be facilitated by storing, in a secure and reliable way, information relating to such sharing in a blockchain. Thus overall use of ISP network resources may be enhanced, since participating users may have confidence their devices are not used solely for the benefit of other users. The ISP may prioritize sharing to attract more traffic, for example by granting higher QoS to devices which have shared their connection. Reputation established via the blockchain may also prevent misuse of network resources.

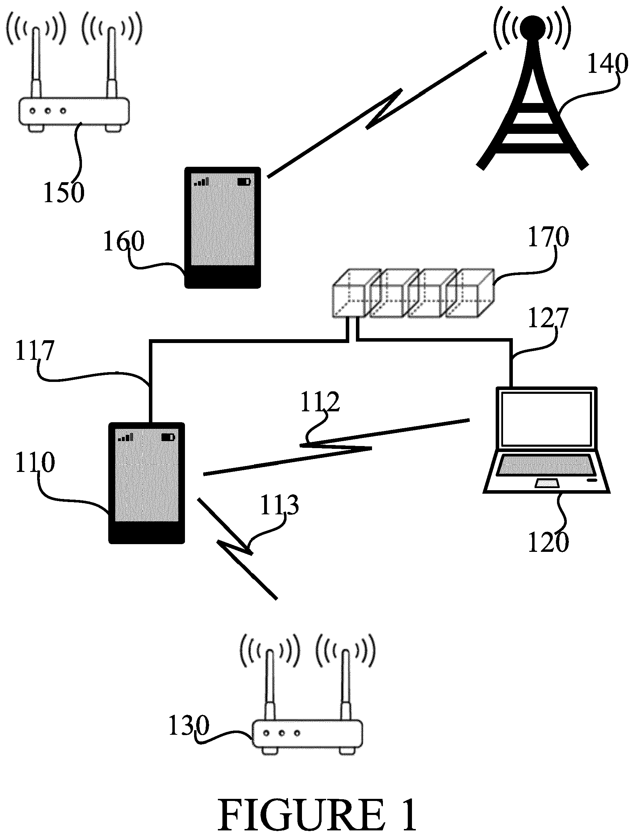

FIGURE 1 illustrates an example system in accordance with at least some embodiments of the present invention. The system comprises internet service providers, ISPs, 130, 140 and 150. The ISPs may, in general, comprise providers of connectivity, using wired or wireless communication technologies. Not all the ISPs need use the same communication technology, indeed in general diverse ISPs exist operating using different technologies and principles. In the illustrated example, ISP 140 is a cellular operator using a cellular technology, such as, for example, LTE or 5G. On the other hand ISPs 130 and 150 are local area ISPs, operating using a non-cellular technology such as WLAN or worldwide interoperability for microwave access, WiMAX. In terms of using the principles described in the present document, the identity of the communication technology or technologies used by the ISP or ISPs is not central.

User equipments 110, 160 may comprise, for example, user terminals, smartphones, cellular telephones, tablet computers, laptop computers, desktop computers or, indeed other suitable electronic devices. User equipments 110, 160 have subscriptions to access at least one of the ISPs 130, 140, 150. The ISPs may act as gateways to the Internet, for example. In the illustrated system, user equipment 110 is a subscriber of ISP 130. A wireless link 113 enables user equipment 110 to access network connectivity via ISP 130, for example to access information on the Internet, to stream media content or to send and receive emails. Wireless link 113 may have a downlink for conveying information from ISP 130 to user equipment 110, and an uplink for conveying information from user equipment 110 to ISP 130. Wireless link 113 may be arranged in accordance with a communication technology which is supported by both user equipment 110 and ISP 130, to enable interoperability of these devices with each other.

In the illustrated system, user equipment 160 has a wireless link with ISP 140, which, as noted above, is a cellular operator. User equipments 110 and 160 need not be of a same type, or indeed even capable of operating using the same communication technology.

User equipment 120 may be a device in general resembling user equipments 110 and 160. A difference is, however, that user equipment 120 is willing to access network connectivity via another user equipment. This may be due to one or more different reasons, for example, it may be that user equipment 120 does not have an active subscription to an ISP, or user equipment 120 is subscribed to an ISP which does not offer service at a location where user equipment 120 is at the moment.

User equipment 110 may be configured to act as a local hotspot to share the network connection it has via ISP 130. For example, user equipment 110 may act as a WLAN hotspot for other user equipments nearby. Thus user equipment 120 may obtain connectivity via user equipment 110 and ISP 130. A wireless link 112 is illustrated in FIGURE 1, enabling this connectivity via user equipment 110. From the point of view of user equipment 110, user equipment 120 is a client device. On the other hand, from the point of view of user equipment 120, user equipment 110 is a networked device.

In general user equipment 110 may be dis-inclined to share its network connectivity even if it has the ability to do so, since in order to provide connectivity to a further user equipment, it may have to accept disadvantages affecting itself, which may include, for example, drain on its battery, reduced bandwidth for its own connections and, possibly, increased monetary charges where its subscription with ISP 130 is charged according to use. A solution enabling users to build network reputations and to be treated with adequate quality of service, QoS, policies, would therefore be useful. Furthermore, if such a solution would enable building a reputation toward multiple ISPs, the reputation would be even more useful. Protecting user privacy at the same time is also relevant.

Herein are described techniques for allowing users to record their network activity in sharing a connection and/or using a shared connection in an anonymous and secure way. As such, users willing to share their own data plan can acquire credits, which can be called on later on within the same or a different ISP, for example to get a better QoS.

Being built on blockchain principles, such a solution is tamper proof in that no ISP can modify the information for the benefit of their own customers. Further, anonymity may be achieved, and customers may create or delete the profiles at will without being identified by their ISP. Even users behind the same ISP data subscription, such as campus, resorts or even families, can create their own sharing profiles and access network services with different QoS.

FIGURE 1 illustrated a blockchain 170. It should be understood that blockchain 170 is logically present in the system, it need not be maintained in a physical neighborhood of the sharing. Connections 117 and 127 to blockchain 170, from user equipment 110 and user equipment 120, respectively, are logical connections and may in fact traverse one of ISPs 130, 140 and 150, or other networks or gateways. What is relevant is that the user equipments are enabled to communicate with blockchain 170, for example using transport layer security, TLS, or secure shell, SSH.

By a blockchain it is meant an ordered sequence of blocks of information. The information in an individual block comprises so-called transaction data, which may comprise any data that it is desired to store in the blockchain. Each individual block also comprises a hash of the immediately preceding block in the sequence. As the subsequent block will, in turn, comprise a corresponding hash of the present block, calculated over the transaction data and the hash in the block, the blocks in the sequence collectively form a Merkle tree, or hash tree. Thus the transaction data stored in a blockchain becomes inherently secure against modification, since changing even a single bit in an already established block in the chain would be easily detectable, as the hash values would no longer match. It is a characteristic of hash functions, that changing even a single bit in the input data causes a large change in the hash itself. In some embodiments, each block in the chain further comprises a timestamp indicating when the block was established into the blockchain. A new block may be established at regular time intervals, or as a response to accumulation of a pre-determined quantity of new transaction data, for example.

In principle a blockchain may be decentralized in that it may be stored in a number of nodes, which copy newly established blocks to each other. This may be useful in the present context, as plural ISPs may participate in maintaining blockchain 170. User equipments may enter entries into the transaction data of the blockchain by transmitting the entry to a node which participates in the blockchain. In these entries, the user equipments may identify themselves as the owner or originator of the entry by including in the entry their public key of a key pair of a public key cryptosystem. Examples of public key cryptosystems include the Rivest-Shamir-Adleman, RSA, and the ElGamal cryptosystems. A key pair comprises a public key and an associated private key, the private key being held by the user equipment itself. The public key is basically only a random bit sequence, whereby the actual identity of the user equipment may be withheld from the blockchain to protect user privacy.

A node accessing the transaction data may verify it is interacting with the node which made a particular entry in the transaction data by using the public key comprised in the entry. For example, the node may generate a random nonce and provide it to the node it is interacting with, such that the interacting node signs the nonce with its private key and returns the signature as a response to the nonce. The public key, while not usable in generating the signature, is nonetheless usable in verifying a provided signature is correct. Since only the holder of the private key can generate the correct signature, this provides high confidence the interacting node is indeed the node which has made the entry. Alternatively, the public key may be used in establishing a TLS connection, for example, resulting in a similar confirmation that the interacting node is the node which made the entry in the transaction data.

To access the network connection of user equipment, UE, 110, user equipment, UE, 120 may transmit an access request to UE 110. In effect, UE 120 is here requesting UE 110 to act in a role of sub-ISP to ISP 130. UE 110 may advertise its willingness to act in this role, for example, by broadcasting advertisement messages over a radio interface or, for example, posting advertisement messages online on a suitable machine-to-machine noticeboard that UEs may monitor, for example periodically or in response to determining a need for a network connection.

The access request may comprise at least one identity of UE 120. In detail, the access request may comprise the public key of UE 120. Additionally, the access request may comprise also at least one further identity of UE 120, such as, for example, an international mobile subscriber identity, IMSI, where UE 120 has one, or a name of a user of UE 120. Further, the access request may comprise an indication of an extent of access to the network connection of UE 110 that UE 120 requests. Examples of such indications include an indication of bandwidth, and an indication as to a quantity of data UE 120 wishes to transfer over the network connection. UE 110 may decide on a bandwidth and/or quantity of data to be provided, at most, via the shared network connection. The indication of extent of access in the access request may be seen as a request, which UE 110 may accept as such, or UE 110 may choose to offer less than what UE 120 asks for in terms UE 110 offers to UE 120 in response.

In response to the access request, UE 120 may transmit to UE 110 a response message comprising at least one, and optionally all, of the following:
- an identity of ISP 130 providing the network connection,
- a public identity of the sub-ISP, UE 110, which may comprise its public key used in the blockchain,
- a signature of public identity of UE 110 by the main ISP, ISP 130, as a proof that there is indeed a subscribed plan between the ISP and the sub-ISP device acting as an hotspot, and
- information describing the service being offered, these being the offered terms of service

In some embodiments, the response message comprises the offered terms and the public identity of UE 110 but not the identity of ISP 130, or the signature of ISP 130.

UE 120 may respond to the response message by transmitting an acceptance message, which may comprise, as an indication of the acceptance, a signature of UE 120 applied to, for example, the information describing the service being offered. Thus a negotiation process may be seen between the UEs, namely UE 110 offers the service, and UE 120 accepts the offer by signing it with its private key. Additionally, UE 120 may initially request a certain kind of access in the access request, as described above. As noted above, since only the holder of the private key can generate a valid signature, this is a dependable way to establish the terms of the network connection sharing.

Once UE 110 has verified the signature of UE 120, for example with reference to blockchain 170, UE 110 may grant UE 120 access to its network connection. UE 110 may enforce the agreed terms, which may comprise a bandwidth cap, for example.

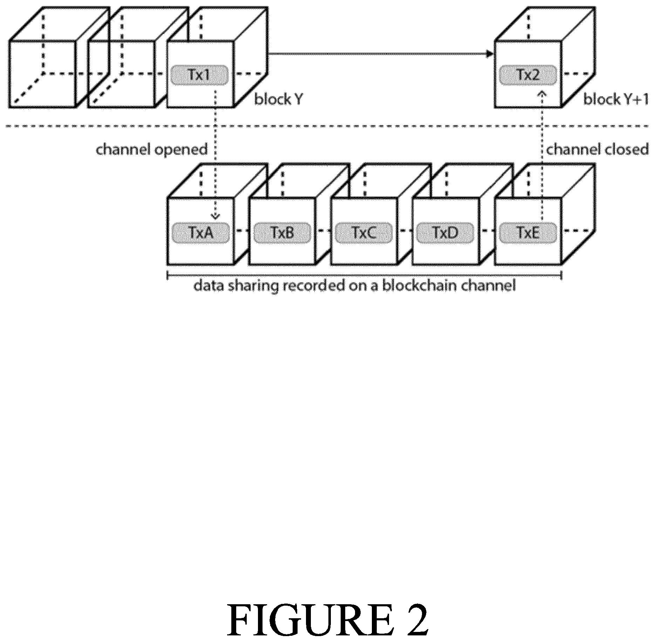

During the sharing, information relating to the sharing may be stored. For example, once the sharing begins, the opening of the session may be recorded in the transaction data of the blockchain, and during sharing indications of packets conveyed via UE 110 on behalf of UE 120 may be stored in the transaction data of the blockchain. These indications may comprise, for example, sizes of the packets. In some embodiments, a blockchain channel, as described in below in connection with FIGURE 2, is opened once the sharing begins, and is used to record the information relating to the sharing in the blockchain.

Alternatively to storing information in the blockchain during the sharing, information relating to the sharing may be recorded in the blockchain once the sharing ends. Once the sharing ends, the total quantity of data conveyed by UE 110 on behalf of UE 120 is known, and a record may be made in the blockchain indicating this.

The information relating to the sharing will remain in the blockchain, and UE 110 may refer to it in connection with requesting service from ISP 130, for example, when requesting an increased QoS, for example to enable streaming a high definition movie. In some embodiments, the more data is shared in the past by a particular UE, the better QoS is provided to this UE. ISP 130 may recognize the sharing done my UE 110 as useful, since it increases the utilization rate of the network of ISP 130. Thus, overall, the described process increases the use rate of networks, and enables more diverse connectivity, since UEs may be enabled to connect to the network also in geographic areas where they have no native coverage from their own ISP.

UE 110 may likewise, when changing ISP, indicate to the new ISP that it has a history of sharing its connection, wherefore the new ISP may trust the UE to flexibly use its network to a greater extent than a UE which does not share its network connection. In this sense the blockchain-based reputation mechanism acts as a trust enabler, driving enhanced network usage since a new user may be granted more extensive network access if he or she is considered reliable and engaged.

In some embodiments, separately, ISP 130 may monetarily compensate the user of UE 110 for the sharing. UE 110 may request this by proving to ISP 130 it performed the sharing, for example, by pointing to the entry in the blockchain describing the sharing, and then signing a nonce provided by ISP 130 to prove it was the UE that granted the access.

FIGURE 2 illustrates an example of blockchain content in accordance with at least some embodiments of the present invention. In the upper part of the picture, a distributed blockchain is shown. This blockchain is the one shared among ISPs and users, and used to provide, for example, different QoS to different users depending on their data sharing history.

On the other hand, on the bottom part of the picture we can see what is referred to herein as a "blockchain channel" defined as a class of techniques designed to allow users to make multiple transactions without committing all of the transactions to the blockchain. Once the terms are agreed between the sub-ISP and the device seeking access to the shared network connection, the contract may be recorded in the blockchain and a channel may be opened. Such a channel may allow the whole open systems interconnection, OSI, application layer to be agreed between the sub-ISP and the device seeking access, signed and time-stamped. Once the channel is closed, either because the device seeking access does not need the connection anymore, or because the sub-ISP decides to drop the connection, a summary of the OSI application layer is written within the global blockchain. Such a summary may be used to compute a new data-ratio, that is, the relation between data shared and data consumed, between the sub-ISP and UE 120, and eventually used to provide an improved network QoS. The usage of such channels overcomes the blockchain latency limitation and allows the use of the blockchain technology for network profiling.

During the sharing of the network connection, a new block, or potentially even plural new blocks, may be established in the blockchain. This presents no problem, since once the sharing ends, information concerning the ended sharing may be included in transaction data of a subsequent block.

Such channels may technically comprise solutions known as payment channels or micropayment channels in the Bitcoin blockchain technology. As another example, the channel may comprise a description of the network sharing formatted according to a pre-determined channel format. The description of the network sharing may comprise indications of the quantity of data transferred and/or bandwidth used. Once the sharing ends, the participating UEs may store a hash of the completed description in the blockchain. Subsequently, UE 110 may present the description, which it may store locally or in a cloud storage server, and use the hash in the blockchain to validate the description really does describe a sharing session which has taken place.

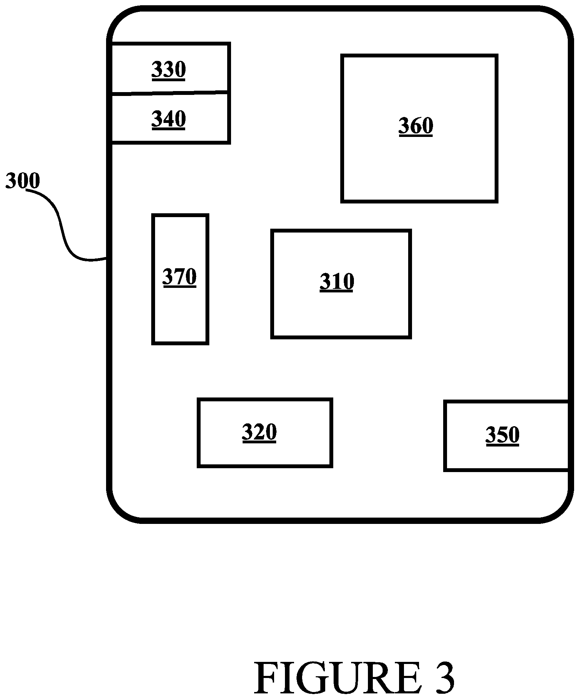

FIGURE 3 illustrates an example apparatus capable of supporting at least some embodiments of the present invention. Illustrated is device 300, which may comprise, for example, a device such as UE 110 or UE 120 of FIGURE 1. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. Processor 310 may be a control device. A processing core may comprise, for example, a Cortex-A8 processing core manufactured by ARM Holdings or a Steamroller processing core produced by Advanced Micro Devices Corporation. Processor 310 may comprise at least one Qualcomm Snapdragon and/or Intel Atom processor. Processor 310 may comprise at least one application-specific integrated circuit, ASIC. Processor 310 may comprise at least one field-programmable gate array, FPGA. Processor 310 may be means for performing method steps in device 300. Processor 310 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a user equipment, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise random-access memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300.

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver. Transmitter 330 and/or receiver 340 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 300 may comprise a near-field communication, NFC, transceiver 350. NFC transceiver 350 may support at least one NFC technology, such as NFC, Bluetooth, Wibree or similar technologies.

Device 300 may comprise user interface, UI, 360. UI 360 may comprise at least one of a display, a keyboard, a touchscreen, a vibrator arranged to signal to a user by causing device 300 to vibrate, a speaker and a microphone. A user may be able to operate device 300 via UI 360, for example to adjust network connection sharing parameters.

Device 300 may comprise or be arranged to accept a user identity module 370. User identity module 370 may comprise, for example, a subscriber identity module, SIM, card installable in device 300. A user identity module 370 may comprise information identifying a subscription of a user of device 300. A user identity module 370 may comprise cryptographic information usable to verify the identity of a user of device 300 and/or to facilitate encryption of communicated information and billing of the user of device 300 for communication effected via device 300.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in FIGURE 3. For example, where device 300 comprises a smartphone, it may comprise at least one digital camera. Some devices 300 may comprise a back-facing camera and a front-facing camera, wherein the back-facing camera may be intended for digital photography and the front-facing camera for video telephony. Device 300 may comprise a fingerprint sensor arranged to authenticate, at least in part, a user of device 300. In some embodiments, device 300 lacks at least one device described above. For example, some devices 300 may lack a NFC transceiver 350 and/or user identity module 370.

Processor 310, memory 320, transmitter 330, receiver 340, NFC transceiver 350, UI 360 and/or user identity module 370 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

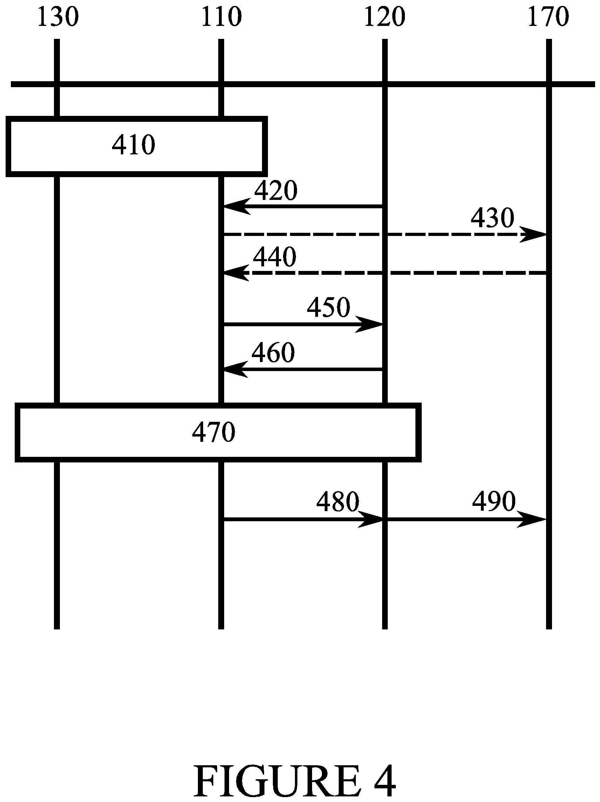

FIGURE 4 illustrates signalling in accordance with at least some embodiments of the present invention. On the vertical axes are disposed, from the left to the right, ISP 130, UE 110, UE 120 and, finally, blockchain 170 of FIGURE 1. Time advances from the top toward the bottom.

In phase 410, UE 110 has an association with ISP 130, enabling access to the Internet or other networks via ISP 130. This association may be understood to continue during the other phases of the illustrated process. In phase 420, UE 120 provides to UE 110 the access request message, which has been described herein above.

In optional phases 430 and 440 UE 110 may consult blockchain 170, for example to check a reputation of UE 120 and/or to fetch a public key of UE 120. In case UE 120 has a low reputation, UE 110 may refuse to share its network connection. In some embodiments UE 110 is configured to only allow such devices the share its network connection, which have an established reputation. A reputation in this regard may be useful since a maliciously acting UE 120 may use the shared connection for an undesired purpose, such as spreading malware or extremist content.

In phase 450 UE 110 issues the response message to UE 120, as described herein above, and in phase 460 UE 120 transmits the acceptance message back to UE 110, the acceptance message comprising, for example, the terms offered by UE 110 in phase 450, signed with the private key of UE 120. Responsive to the acceptance message and successful verification of the signature therein, UE 110 may share its network connection with UE 120, illustrated in FIGURE 4 as phase 470. In this phase, packets from ISP 130 are conveyed by UE 110 onward to UE 120, and packets from UE 120 are conveyed by UE 110 to ISP 130.

Further, in phase 470, UE 110 and/or UE 120 may keep records on the sharing, for example in the form of an open blockchain channel, as described above. Once the sharing ends, for example due to UE 110 inactivating its hotspot functionality or due to UE 120 indicating it no longer needs the connectivity, UE 110 and/or UE 120 may record information relating to the sharing in blockchain 170, phases 480 and 490. For example, a record describing the sharing may be prepared, the record then being signed by both UE 110 and by UE 120.

Overall a handshake process is conducted between UE 110 and UE 120 to agree on sharing the network connection and, in some embodiments, on the terms of this sharing. Individual messages may be transmitted in a somewhat different order than illustrated in FIGURE 4, and contents of the messages may be different from what is herein explicitly described, as long as the sharing is agreed on. Furthermore, the information relating to the sharing is stored in the blockchain once the sharing ends.

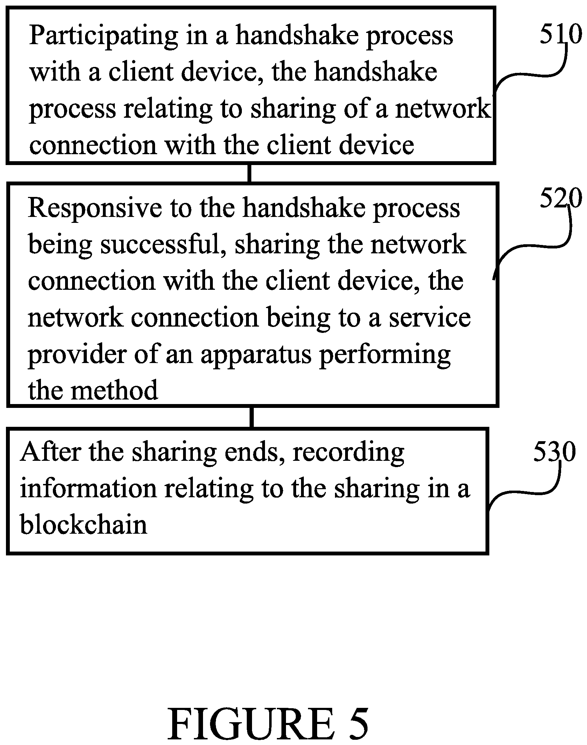

FIGURE 5 is a flow graph of a method in accordance with at least some embodiments of the present invention. The phases of the illustrated method may be performed in UE 110, or in a control device configured to control the functioning thereof, when installed therein.

Phase 510 comprises participating in a handshake process with a client device, the handshake process relating to sharing of a network connection with the client device. Phase 520 comprises, responsive to the handshake process being successful, sharing the network connection with the client device, the network connection being to a service provider of an apparatus performing the method. Phase 530 comprises, after the sharing ends, recording information relating to the sharing in a blockchain.

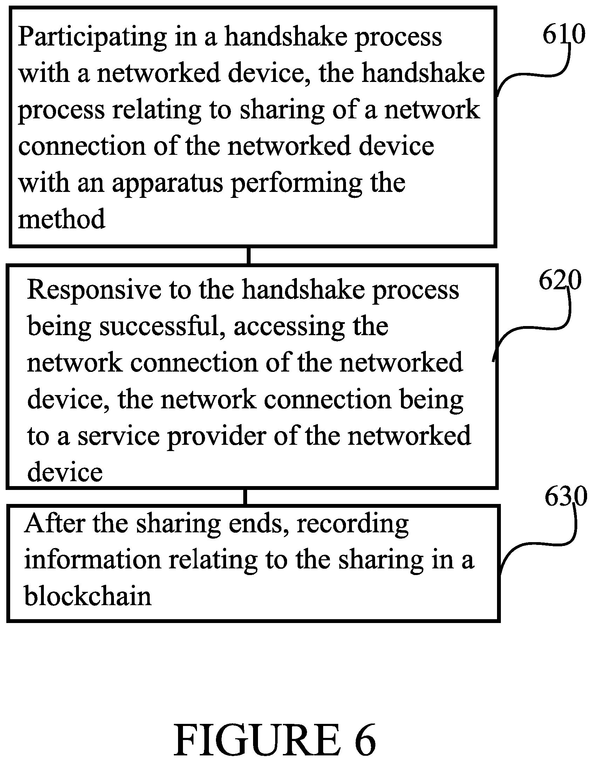

FIGURE 6 is a flow graph of a method in accordance with at least some embodiments of the present invention. The phases of the illustrated method may be performed in UE 120, or in a control device configured to control the functioning thereof, when installed therein.

Phase 610 comprises participating in a handshake process with a networked device, the handshake process relating to sharing of a network connection of the networked device with an apparatus performing the method. Phase 620 comprises responsive to the handshake process being successful, accessing the network connection of the networked device, the network connection being to a service provider of the networked device. Finally, phase 630 comprises, after the sharing ends, recording information relating to the sharing in a blockchain.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in enhancing network sharing and obtaining a more effective use of a network.

### ACRONYMS LIST

- 5G: fifth generation
- IMSI: international mobile subscriber identity
- ISP: internet service providers
- LTE: long term evolution
- NR: new radio
- OSI: open systems interconnection
- QoS: quality of service
- RSA: Rivest-Shamir-Adleman
- SSH: secure shell
- TLS: transport layer security
- UE: user equipment
- WLAN: wireless local area network
- WiMAX: worldwide interoperability for microwave access

### REFERENCE SIGNS LIST

| | |
|---|---|
| 110, 120, 160 | user equipment |
| 130, 140, 150 | ISP |
| 170 | blockchain |
| 112, 113 | wireless link |
| 117, 127 | connection |
| 300 - 370 | Structure of the device of FIGURE 3 |
| 410 - 490 | Phases of FIGURE 4 |
| 510 - 530 | Phases of the method of FIGURE 5 |
| 610 - 640 | Phases of the method of FIGURE 6 |

## Claims

1. An apparatus (300) comprising means (310, 320, 330, 340) for:
- participating (510) in a handshake process with a client device, the handshake process relating to sharing of a network connection of the apparatus with the client device;
- responsive to the handshake process being successful, sharing (520) the network connection with the client device, the network connection being to a service provider of the apparatus, and
- after the sharing ends, recording (530) information relating to the sharing in a blockchain, wherein the information recorded in the blockchain comprises a quantity of data conveyed over the shared connection to the client device.

2. The apparatus (300) according to claim 1, wherein the handshake process comprises providing to the client device an identity of the service provider, an identity of the apparatus and a cryptographic signature of the identity of the apparatus by the service provider, and receiving from the client device information signed with a private key of the client device.

3. The apparatus (300) according to claim 1 or 2, wherein the handshake process comprises receiving from the client device an identity of the client device.

4. The apparatus (300) according to claim 2 or 3 wherein the information signed with the private key of the client device comprises terms offered by the apparatus for the sharing.

5. The apparatus (300) according to any of claims 1 - 4, wherein the apparatus is further configured to refer to the information relating to the sharing when requesting service from the service provider of the apparatus.

6. An apparatus (300) comprising means (310, 320, 330, 340) for:
- participating (610) in a handshake process with a networked device, the handshake process relating to sharing of a network connection of the networked device with the apparatus;
- responsive to the handshake process being successful, accessing (620) the network connection of the networked device, the network connection being to a service provider of the networked device, and
- after the sharing ends, recording (630) information relating to the sharing in a blockchain, wherein the information recorded in the blockchain comprises a quantity of data conveyed over the shared connection to the apparatus.

7. The apparatus according to any preceding claim, wherein the means comprises at least one processor; and at least one memory including computer program code, the at least one memory and computer program code configured to, with the at least one processor, control the performance of the apparatus.

8. A method, performed by an apparatus, the method comprising:
- participating (510) in a handshake process with a client device, the handshake process relating to sharing of a network connection with the client device;
- responsive to the handshake process being successful, sharing (520) the network connection with the client device, the network connection being to a service provider of the apparatus, and
- after the sharing ends, recording (530) information relating to the sharing in a blockchain, wherein the information recorded in the blockchain comprises a quantity of data conveyed over the shared connection to the client device.

9. The method according to claim 8, wherein the handshake process comprises providing to the client device an identity of the service provider, an identity of the apparatus and a cryptographic signature of the identity of the apparatus by the service provider, and receiving from the client device information signed with a private key of the client device.

10. The method according to claim 8 or 9, wherein the handshake process comprises receiving from the client device an identity of the client device.

11. The method according to claim 9 or 10, wherein the information signed with the private key of the client device comprises terms offered by the apparatus for the sharing.

12. The method according to any of claims 8 - 11, further comprising referring to the information relating to the sharing when requesting service from the service provider of the apparatus.

13. A method, performed by an apparatus, the method comprising:
- participating (610) in a handshake process with a networked device, the handshake process relating to sharing of a network connection of the networked device with the apparatus;
- responsive to the handshake process being successful, accessing (620) the network connection of the networked device, the network connection being to a service provider of the networked device, and
- after the sharing ends, recording (630) information relating to the sharing in a blockchain, wherein the information recorded in the blockchain comprises a quantity of data conveyed over the shared connection to the apparatus.

14. The method according to claim 13, wherein the handshake process comprises providing to the networked device an identifier of the apparatus, receiving from the networked device terms the networked device offers and returning to the networked device the terms, signed with a private key of the apparatus.

15. A computer program configured to cause at least the following to be performed, when run on at least one processing core of an apparatus:
- either participating (510) in a handshake process with a client device, the handshake process relating to sharing of a network connection with the client device, and
- responsive to the handshake process being successful, sharing (520) the network connection with the client device, the network connection being to a service provider of the apparatus, and
- after the sharing ends, recording (530) information relating to the sharing in a blockchain, wherein the information recorded in the blockchain comprises a quantity of data conveyed over the shared connection to the client device, or:
- participating (610) in a handshake process with a networked device, the handshake process relating to sharing of a network connection of the networked device with the apparatus, and
- responsive to the handshake process being successful, accessing (620) the network connection of the networked device, the network connection being to a service provider of the networked device, and
- after the sharing ends, recording (630) information relating to the sharing in a blockchain, wherein the information recorded in the blockchain comprises a quantity of data conveyed over the shared connection to the apparatus.

## Patentansprüche

1. Vorrichtung (300) mit Mitteln (310, 320, 330, 340) zum:
- Teilnehmen (510) an einem Handshake-Prozess mit einem Client-Gerät, wobei sich der Handshake-Prozess auf die gemeinsame Nutzung einer Netzwerkverbindung der Vorrichtung mit dem Client-Gerät bezieht:
- als Reaktion auf den erfolgreichen Handshake-Prozess, gemeinsames Nutzen (520) der Netzwerkverbindung mit dem Client-Gerät, wobei die Netzwerkverbindung zu einem Dienstanbieter der Vorrichtung besteht, und
- nach Beendigung der gemeinsamen Nutzung, Aufzeichnen (530) von Informationen in Bezug auf die gemeinsame Nutzung in einer Blockchain, wobei die in der Blockchain aufgezeichneten Informationen eine Datenmenge umfassen, die über die gemeinsam genutzte Verbindung an das Client-Gerät übermittelt wurde.

2. Vorrichtung (300) nach Anspruch 1, wobei der Handshake-Prozess das Bereitstellen einer Identität des Dienstanbieters, einer Identität der Vorrichtung und einer kryptographischen Signatur der Identität der Vorrichtung durch den Dienstanbieter an das Client-Gerät und das Empfangen von mit einem privaten Schlüssel dem Client-Gerät signierten Informationen von dem Client-Gerät umfasst.

3. Vorrichtung (300) nach Anspruch 1 oder 2, wobei der Handshake-Prozess das Empfangen einer Identität des Client-Geräts von dem Client-Gerät umfasst.

4. Vorrichtung (300) nach Anspruch 2 oder 3, wobei die mit dem privaten Schlüssel des Client-Geräts signierten Informationen Bedingungen umfassen, die von der Vorrichtung für die gemeinsame Nutzung angeboten werden.

5. Vorrichtung (300) nach einem der Ansprüche 1 bis 4, wobei die Vorrichtung ferner so konfiguriert ist, dass sie auf die Informationen bezüglich der gemeinsamen Nutzung Bezug nimmt, wenn sie einen Dienst von dem Dienstanbieter der Vorrichtung anfordert.

6. Vorrichtung (300) mit Mitteln (310, 320, 330, 340) zum:
- Teilnehmen (610) an einem Handshake-Prozess mit einem vernetzten Gerät, wobei sich der Handshake-Prozess auf die gemeinsame Nutzung einer Netzwerkverbindung des vernetzten Geräts mit der Vorrichtung bezieht:
- als Reaktion auf den erfolgreichen Handshake-Prozess, Zugreifen (620) auf die Netzwerkverbindung des vernetzten Geräts, wobei die Netzwerkverbindung zu einem Dienstanbieter der Vorrichtung besteht, und
- nach Beendigung der gemeinsamen Nutzung, Aufzeichnen (630) von Informationen in Bezug auf die gemeinsame Nutzung in einer Blockchain, wobei die in der Blockchain aufgezeichneten Informationen eine Datenmenge umfassen, die über die gemeinsam genutzte Verbindung an die Vorrichtung übermittelt wurde.

7. Vorrichtung nach einem der vorstehenden Ansprüche, wobei die Mittel mindestens einen Prozessor und mindestens einen Speicher mit Computerprogrammcode umfassen, wobei der mindestens eine Speicher und der Computerprogrammcode so konfiguriert sind, dass sie mit dem mindestens einen Prozessor die Leistung der Vorrichtung steuern.

8. Verfahren, das von einer Vorrichtung durchgeführt wird, wobei das Verfahren umfasst:
- Teilnehmen (510) an einem Handshake-Prozess mit einem Client-Gerät, wobei sich der Handshake-Prozess auf die gemeinsame Nutzung einer Netzwerkverbindung mit dem Client-Gerät bezieht;
- als Reaktion auf den erfolgreichen Handshake-Prozess, gemeinsames Nutzen (520) der Netzwerkverbindung mit dem Client-Gerät, wobei die Netzwerkverbindung zu einem Dienstanbieter der Vorrichtung besteht, und
- nach Beendigung der gemeinsamen Nutzung, Aufzeichnen (530) von Informationen in Bezug auf die gemeinsame Nutzung in einer Blockchain, wobei die in der Blockchain aufgezeichneten Informationen eine Datenmenge umfassen, die über die gemeinsam genutzte Verbindung an das Client-Gerät übermittelt wurde.

9. Verfahren nach Anspruch 8, wobei der Handshake-Prozess das Bereitstellen einer Identität des Dienstanbieters, einer Identität der Vorrichtung und einer kryptographischen Signatur der Identität der Vorrichtung durch den Dienstanbieter an das Client-Gerät und das Empfangen von mit einem privaten Schlüssel dem Client-Gerät signierten Informationen von dem Client-Gerät umfasst.

10. Verfahren nach Anspruch 8 oder 9, wobei der Handshake-Prozess das Empfangen einer Identität des Client-Geräts von dem Client-Gerät umfasst.

11. Verfahren nach Anspruch 9 oder 10, , wobei die mit dem privaten Schlüssel des Client-Geräts signierten Informationen Bedingungen umfassen, die von der Vorrichtung für die gemeinsame Nutzung angeboten werden.

12. Verfahren nach einem der Ansprüche 8 bis 11, ferner umfassend die Bezugnahme auf die Informationen bezüglich der gemeinsamen Nutzung, wenn ein Dienst von dem Dienstanbieter der Vorrichtung angefordert wird.

13. Verfahren, das von einer Vorrichtung durchgeführt wird, wobei das Verfahren umfasst:
- Teilnehmen (610) an einem Handshake-Prozess mit einem vernetzten Gerät, wobei sich der Handshake-Prozess auf die gemeinsame Nutzung einer Netzwerkverbindung des vernetzten Geräts mit der Vorrichtung bezieht:
- als Reaktion auf den erfolgreichen Handshake-Prozess, Zugreifen (620) auf die Netzwerkverbindung des vernetzten Geräts, wobei die Netzwerkverbindung zu einem Dienstanbieter der Vorrichtung besteht, und
- nach Beendigung der gemeinsamen Nutzung, Aufzeichnen (630) von Informationen in Bezug auf die gemeinsame Nutzung in einer Blockchain, wobei die in der Blockchain aufgezeichneten Informationen eine Datenmenge umfassen, die über die gemeinsam genutzte Verbindung an die Vorrichtung übermittelt wurde.

14. Verfahren nach Anspruch 13, wobei der Handshake-Prozess das Bereitstellen eines Identifikators der Vorrichtung an das vernetzte Gerät, das Empfangen von Bedingungen, die das vernetzte Gerät anbietet, von dem vernetzten Gerät und das Zurücksenden der Bedingungen, signiert mit einem privaten Schlüssel der Vorrichtung, an das vernetzte Gerät umfasst.

15. Computerprogramm, das so konfiguriert ist, dass es beim Ausführen auf mindestens einem Verarbeitungskern einer Vorrichtung mindestens das Folgende ausführt
- entweder Teilnehmen (510) an einem Handshake-Prozess mit einem Client-Gerät, wobei sich der Handshake-Prozess auf die gemeinsame Nutzung einer Netzwerkverbindung mit dem Client-Gerät bezieht, und
- als Reaktion auf den erfolgreichen Handshake-Prozess, gemeinsames Nutzen (520) der Netzwerkverbindung mit dem Client-Gerät, wobei die Netzwerkverbindung zu einem Dienstanbieter der Vorrichtung besteht, und
- nach Beendigung der gemeinsamen Nutzung, Aufzeichnen (530) von Informationen in Bezug auf die gemeinsame Nutzung in einer Blockchain, wobei die in der Blockchain aufgezeichneten Informationen eine Datenmenge umfassen, die über die gemeinsam genutzte Verbindung an das Client-Gerät übermittelt wurde, oder:
- Teilnehmen (610) an einem Handshake-Prozess mit einem vernetzten Gerät, wobei sich der Handshake-Prozess auf die gemeinsame Nutzung einer Netzwerkverbindung des vernetzten Geräts mit der Vorrichtung bezieht,
- als Reaktion auf den erfolgreichen Handshake-Prozess, Zugreifen (620) auf die Netzwerkverbindung des vernetzten Geräts, wobei die Netzwerkverbindung zu einem Dienstanbieter der Vorrichtung besteht, und
- nach Beendigung der gemeinsamen Nutzung, Aufzeichnen (630) von Informationen in Bezug auf die gemeinsame Nutzung in einer Blockchain, wobei die in der Blockchain aufgezeichneten Informationen eine Datenmenge umfassen, die über die gemeinsam genutzte Verbindung an die Vorrichtung übermittelt wurde.

## Revendications

1. Appareil (300) comprenant un moyen (310, 320, 330, 340) pour :
- participer (510) à un processus d'établissement de liaison avec un dispositif client, le processus d'établissement de liaison concernant le partage d'une connexion réseau de l'appareil avec le dispositif client :
- en réponse à la réussite du processus d'établissement de liaison, partager (520) la connexion réseau avec le dispositif client, la connexion réseau étant destinée à un fournisseur de services de l'appareil, et
- après la fin du partage, enregistrer (530) des informations concernant le partage dans une chaîne de blocs, dans lequel les informations enregistrées dans la chaîne de blocs comprennent une quantité de données acheminées sur la connexion partagée vers le dispositif client.

2. Appareil (300) selon la revendication 1, dans lequel le processus d'établissement de liaison comprend la fourniture au dispositif client d'une identité du fournisseur de services, d'une identité de l'appareil et d'une signature cryptographique de l'identité de l'appareil par le fournisseur de services, et la réception à partir du dispositif client d'informations signées avec une clé privée du dispositif client.

3. Appareil (300) selon la revendication 1 ou 2, dans lequel le processus d'établissement de liaison comprend la réception à partir du dispositif client d'une identité du dispositif client.

4. Appareil (300) selon la revendication 2 ou 3, dans lequel les informations signées avec la clé privée du dispositif client comprennent des conditions offertes par l'appareil pour le partage.

5. Appareil (300) selon l'une quelconque des revendications 1 à 4, dans lequel l'appareil est en outre configuré pour se référer aux informations concernant le partage lors de la demande de service auprès du fournisseur de services de l'appareil.

6. Appareil (300) comprenant un moyen (310, 320, 330, 340) pour :
- participer (610) à un processus d'établissement de liaison avec un dispositif en réseau, le processus d'établissement de liaison concernant le partage d'une connexion réseau du dispositif en réseau avec l'appareil ;
- en réponse à la réussite du processus d'établissement de liaison, accéder (620) à la connexion réseau du dispositif en réseau, la connexion réseau étant destinée à un fournisseur de services du dispositif en réseau, et
- après la fin du partage, enregistrer (630) des informations concernant le partage dans une chaîne de blocs, dans lequel les informations enregistrées dans la chaîne de blocs comprennent une quantité de données acheminées sur la connexion partagée vers l'appareil.

7. Appareil selon l'une quelconque des revendications précédentes, dans lequel le moyen comprend au moins un processeur ; et au moins une mémoire comportant un code de programme informatique, la au moins une mémoire et le code de programme informatique étant configurés pour, avec le au moins un processeur, commander les performances de l'appareil.

8. Procédé réalisé par un appareil, le procédé comprenant :
- la participation (510) à un processus d'établissement de liaison avec un dispositif client, le processus d'établissement de liaison concernant le partage d'une connexion réseau avec le dispositif client ;
- en réponse à la réussite du processus d'établissement de liaison, le partage (520) de la connexion réseau avec le dispositif client, la connexion réseau étant destinée à un fournisseur de services de l'appareil, et
- après la fin du partage, l'enregistrement (530) des informations concernant le partage dans une chaîne de blocs, dans lequel les informations enregistrées dans la chaîne de blocs comprennent une quantité de données acheminées sur la connexion partagée vers le dispositif client.

9. Procédé selon la revendication 8, dans lequel le processus d'établissement de liaison comprend la fourniture au dispositif client d'une identité du fournisseur de services, d'une identité de l'appareil et d'une signature cryptographique de l'identité de l'appareil par le fournisseur de services, et la réception à partir du dispositif client d'informations signées avec une clé privée du dispositif client.

10. Procédé selon la revendication 8 ou 9, dans lequel le processus d'établissement de liaison comprend la réception à partir du dispositif client d'une identité du dispositif client.

11. Procédé selon la revendication 9 ou 10, dans lequel les informations signées avec la clé privée du dispositif client comprennent des conditions offertes par l'appareil pour le partage.

12. Procédé selon l'une quelconque des revendications 8 à 11, comprenant en outre la référence aux informations concernant le partage lors de la demande de service auprès du fournisseur de services de l'appareil.

13. Procédé réalisé par un appareil, le procédé comprenant :
- la participation (610) à un processus d'établissement de liaison avec un dispositif en réseau, le processus d'établissement de liaison concernant le partage d'une connexion réseau du dispositif en réseau avec l'appareil ;
- en réponse à la réussite du processus d'établissement de liaison, l'accès (620) à la connexion réseau du dispositif en réseau, la connexion réseau étant destinée à un fournisseur de services de dispositif en réseau, et
- après la fin du partage, l'enregistrement (630) des informations concernant le partage dans une chaîne de blocs, dans lequel les informations enregistrées dans la chaîne de blocs comprennent une quantité de données acheminées sur la connexion partagée vers l'appareil.

14. Procédé selon la revendication 13, dans lequel le processus d'établissement de liaison comprend la fourniture au dispositif en réseau d'un identifiant de l'appareil, la réception à partir d'un dispositif en réseau de conditions qu'offre le dispositif en réseau, et le renvoi au dispositif en réseau des conditions signées avec une clé privée de l'appareil.

15. Programme informatique configuré pour amener au moins les étapes suivantes à être réalisées, lorsqu'il est exécuté sur au moins un noyau de traitement d'un appareil :
- soit participer (510) à un processus d'établissement de liaison avec un dispositif client, le processus d'établissement de liaison concernant le partage d'une connexion réseau avec le dispositif client, et
- en réponse à la réussite du processus d'établissement de liaison, partager (520) la connexion réseau avec le dispositif client, la connexion réseau étant destinée à un fournisseur de services de l'appareil, et
- après la fin du partage, enregistrer (530) des informations concernant le partage dans une chaîne de blocs, dans lequel les informations enregistrées dans la chaîne de blocs comprennent une quantité de données acheminées sur la connexion partagée vers le dispositif client, soit :
- participer (610) à un processus d'établissement de liaison avec un dispositif en réseau, le processus d'établissement de liaison concernant le partage d'une connexion réseau du dispositif en réseau avec l'appareil, et
- en réponse à la réussite du processus d'établissement de liaison, accéder (620) à la connexion réseau du dispositif en réseau, la connexion réseau étant destinée à un fournisseur de services de dispositif en réseau, et
- après la fin du partage, enregistrer (630) des informations concernant le partage dans une chaîne de blocs, dans lequel les informations enregistrées dans la chaîne de blocs comprennent une quantité de données acheminées sur la connexion partagée vers l'appareil.
